# EUROPÄISCHE PATENTSCHRIFT

(11) **EP 1 361 181 B1**
(45) Veröffentlichungstag und Bekanntmachung des Hinweises auf die Patenterteilung: **11.02.2009**
(21) Anmeldenummer: 03010125.7
(22) Anmeldetag: 05.05.2003
(51) Int. Cl.: B65G 21/06

(54) **Profilelement, insbesondere für Seitenwangen eines Fördersystems**
Profile element, in particular for the side walls of a conveying system
Elément profilé, en particulier pour les parois latérales d'un système de convoyage

(30) Priorität: 11.05.2002 DE 20207435 U
(43) Veröffentlichungstag der Anmeldung: 12.11.2003
(73) Patentinhaber: TRANSNORM SYSTEM GmbH, 31177 Harsum (DE)
(72) Erfinder: Warnecke Karl,, 31979 Sibbesse (DE)
(74) Vertreter: Siekmann, Gunnar

(56) Entgegenhaltungen:
- EP-A1- 0 036 958
- EP-A1- 0 053 926
- DE-A1- 10 113 667
- NL-C2- 1 002 713

## Beschreibung

Die Erfindung betrifft ein Profilelement, insbesondere für Seitenwangen eines Fördersystems, mit mindestens einer sich in Längsrichtung des Profilelements erstreckenden Nut mit einer Öffnung zur Aufnahme von Nutensteinen mit den Merkmalen des Oberbegriffs des Patentanspruchs 1. Weiterhin betrifft die Erfindung einen Nutenstein für ein Profilelement.

Profile mit Nuten sind bekannt. Insbesondere sind Nuten mit T-Profilen bekannt, in die Nutensteine mit einem korrespondierenden T-Profil eingeschoben werden können, so daß die Nutensteine zuverlässig in dem Profilelement verankert sind und auf diese Weise flexibel Bauteile an das Profil angebracht werden können. Solche Profile sind beispielsweise aus der DE 39 30 676 A1 oder der DE 196 46 541 C1 bekannt.

Ein gattungsgemäßes Profilelement ist aus der NL-C2-1002713 bekannt. Auch ein gattungsgemäßer Nutenstein ist aus dieser Druckschrift bekannt. Ein weiteres Profilelement mit hinterschnittenen Nuten zur Aufnahme von Befestigungsmitteln wie z.B. Hammerschrauben ist aus der EP-A1-0053926 bekannt.

Der Erfindung liegt nun die Aufgabe zugrunde, ein Profilelement und einen Nutenstein der eingangs genannten Art zu schaffen, die insbesondere für Fördersysteme geeignet und leicht zu reinigen sind.

Die Lösung dieser Aufgabe erfolgt mit einem Profilelement mit den Merkmalen des Anspruchs 1 und mit einem Nutenstein mit den Merkmalen des Patentanspruchs 13. Vorteilhafte Weiterbildungen der Erfindung sind in den Unteransprüchen beschrieben.

Erfindungswesentlich ist, daß das Profilelement mit der mindestens einen sich in Längsrichtung des Profilelements erstreckenden Nut mit einer Öffnung zur Aufnahme von Nutensteinen so ausgebildet ist, daß die Nut im Querschnitt im der Öffnung gegenüberliegenden rückwärtigen Abschnitt im wesentlichen kreisförmig ausgebildet ist, daß sich der im wesentlichen kreisförmige rückwärtige Abschnitt auf einer Seite tangential zur Öffnung fortsetzt und daß sich der im wesentlichen kreisförmige rückwärtige Abschnitt auf der anderen Seite im wesentlichen kreisförmig zur Öffnung fortsetzt. Das mit einer derartigen Nut ausgestattete Profilelement ist besonders leicht zu reinigen bzw. von vornherein vergleichsweise schmutzresistent, da die Nut ausschließlich runde und gerade Abschnitte und keine Ecken bzw. eckig oder kantig hinterschnittene Bereiche aufweist, in denen sich Dreck oder Schmutz ansammeln könnte. Derartige Profilelemente sind also besonders einfach z. B. auch mit Druckluft zu reinigen. Dies ist insbesondere für die Seitenwangen von Fördersystemen von großem Vorteil, da es in vielen Anwendungen darauf ankommt, daß die zu transportierenden Güter nicht verschmutzen. Die Nut des erfindungsgemäßen Profilelements ermöglicht es auch, im Zusammenspiel mit einem speziell daran angepaßten Nutenstein, diesen Nutenstein direkt in die Nut einsetzbar gestalten zu können, also so, daß der Nutenstein durch Drehung direkt in die Nut eingeführt werden kann und nicht von der Seite in den Querschnitt der Nut einzuschieben ist, so wie dies üblicherweise im Stand der Technik, beispielsweise bei Nuten mit T-Profil, notwendig ist.

Bevorzugt bildet der rückwärtige Abschnitt der Nut im Querschnitt einen Halbkreis. Diese Form kann besonderes leicht gereinigt werden. Der sich tangential zur Öffnung fortsetzende Abschnitt ist bevorzugt so ausgebildet, daß er sich zunächst rechtwinklig zur Oberfläche des Profilelements fortsetzt und sich dann noch im Öffnungsbereich aufweitet. Besonders bevorzugt ist hier ein Öffnungswinkel von etwa 20° im vorderen Viertel dieses Abschnittes. Insbesondere dieser Teilbereich ermöglicht ein Einführen des Nutensteins durch die Öffnung der Nut hindurch.

Der sich kreisförmig fortsetzende Abschnitt weist bevorzugt denselben Durchmesser auf wie der kreisförmige rückwärtige Abschnitt und bildet günstigerweise einen Kreisbogen von etwa 55°, so daß insgesamt ein kreisförmiger Abschnitt von etwa 235° gebildet ist. Dieser sich soweit kreisförmig fortsetzende Teil bildet dadurch eine gewisse kreisförmige Hinterschneidung, hinter die ein Nutenstein eingreifen kann.

Das Profilelement ist dabei bevorzugt so ausgerichtet, daß der sich tangential fortsetzende Abschnitt die untere Seite der Nut bildet, da auf dieser Seite in die Nut gelangender Dreck besonders leicht entfernt werden kann.

Ein weiterer Aspekt der Erfindung besteht in der Bereitstellung eines Profilelementes, das in einer besonderen Ausgestaltungen eine Mehrzahl der oben beschriebenen Nuten aufweist. Insbesondere ist ein Profilelement bevorzugt, das eine flächige Seite und drei Nuten aufweist, von denen zwei an den Stirnseiten und eine an der der flächigen Seite gegenüberliegenden Rückseite angeordnet ist. Mit einem solchen Profil lassen sich insbesondere die Seitenwangen eines Fördersystems ausstatten, wobei die flächige Seite den Gütern zugekehrt ist, und über die drei Nuten nach oben, unten und zur Rückseite Verankerungen oder Zusatzelemente angebracht werden können.

Ein anderes besonders bevorzugtes Profilelement ist derart ausgebildet, daß auf einer Seite des Profilelementes zwei Nuten in unterschiedlichen Ebenen des Profilelementes angeordnet sind. Dadurch sind besonders flexible Lösungen und Konstruktionen möglich.

Eine weitere Ausgestaltung der Erfindung liegt in der Kombination des Profilelements mit einem Nutenstein, wobei sich der Nutenstein dadurch auszeichnet, daß der Nutenstein zumindest in Teilbereichen einen kreisförmigen Querschnitt und eine Gewindebohrung aufweist. Dabei ist der kreisförmige Querschnitt des Nutensteines an die kreisförmige Nut des Profilelements angepaßt und kann in diese eingeführt werden. Die den Nutenstein vollständig durchdringende Gewindebohrung erlaubt die Aufnahme einer Gewindeschraube, die durch den Nutenstein hindurch geht und beim Andrehen an die rückwärtige Seite der Nut gepreßt wird und so den Nutenstein fixiert. Der gegenüberliegenden Seite eine keilförmige Seitenfläche auf.

Ein weiterer Aspekt der Erfindung liegt in der Bereitstellung eines Nutensteins für das oben beschriebene Profilelement, wobei der Nutenstein zumindest in Teilbereichen einen kreisförmigen Querschnitt aufweist und asymmetrisch ausgebildet ist und wobei der Nutenstein im Querschnitt eine kreisbogenförmige Seitenfläche und eine keilförmige Seitenfläche aufweist.

Nachfolgend wird die Erfindung anhand eines in der Zeichnung dargestellten bevorzugten Ausführungsbeispiels weiter erläutert. Im einzelnen zeigen die schematischen Darstellungen in:
- Fig. 1:: einen Querschnitt durch ein erstes erfindungsgemäßes Profilelement;
- Fig. 2:: eine vergrößerte Ansicht einer Nut eines erfindungsgemäßen Profilelementes im Querschnitt;
- Fig. 3:: einen Querschnitt durch ein zweites erfindungsgemäßes Profilelement mit einem daran angeschlossenen ersten Profilelement;
- Fig. 4:: eine perspektivische Ansicht der Darstellung gemäß Fig. 2;
- Fig. 5:: eine Querschnittsansicht einer zweiten Ausführung eines Nutensteins; und
- Fig. 6:: eine Querschnittsansicht der zweiten Ausführung des Nutensteins in Anlage in einer Nut.

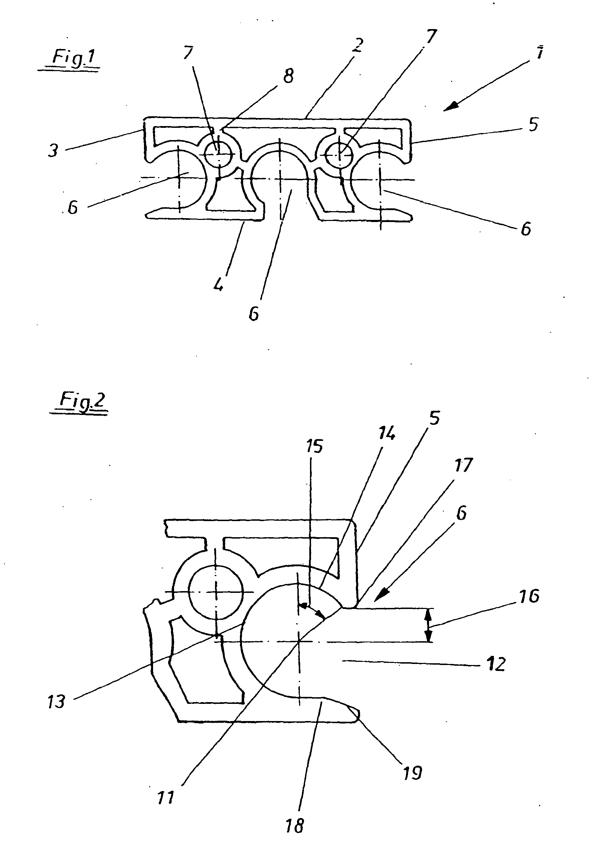

In Fig. 1 ist eine Querschnittsansicht durch ein erstes erfindungsgemäßes Profilelement dargestellt. Dieses ist insgesamt mit 1 bezeichnet. Das Profilelement weist eine glatte oder ebene Seitenfläche 2, eine rückwärtige Seitenfläche 4 und zwei Stirnseiten 3 und 5 auf. In den Stirnseiten 3 und 5 und der rückwärtigen Seitenfläche 4 ist jeweils eine Nut 6 vorgesehen. Im Inneren des Profilelements sind im Querschnitt kreisförmige Strukturen 7 vorgesehen, die dem Profilelement eine hohe mechanische Stabilität verleihen. Diese kreisförmigen Strukturen 7 sind über Stege 8 mit den Seitenwänden und den Nuten 6 verbunden. Die Nuten 6 zeichnen sich durch ihren Querschnitt aus.

In Fig. 2 ist eine Nut 6 vergrößert dargestellt und wird hier im Detail beschrieben. Die Nut 6 ist in weiten Teilen kreisförmig ausgebildet. Ausgehend vom eingezeichneten Mittelpunkt 11 des Kreises ist insbesondere der rückwärtige Abschnitt 13 der Nut, der der Öffnung 12 gegenüberliegt, kreisförmig ausgeführt und setzt sich mit demselben Durchmesser kreisbogenförmig in einen zur Öffnung 12 hinlaufenden kreisförmigen Abschnitt 14 fort. Der Abschnitt 14 umfaßt einen Winkel α von etwa 55°. Die Öffnung 12 ist im Bereich 16, also im Bereich zwischen dem Kreismittelpunkt 11 des kreisförmigen Teils und dem sich bis zum vorderen Endpunkt 17 erstreckenden kreisförmigen Abschnitt 14 entsprechend dem eingezeichneten Pfeil 16 so breit, daß diese Breite mindestens dem halben Durchmesser der bei den Nutensteinen verwendeten Schrauben bzw. Feststellorgane entspricht. Auf der anderen Seite setzt sich der kreisförmige rückwärtige Abschnitt 13 tangential in einem Abschnitt 18 fort, der sich im wesentlichen senkrecht zur vorderen Oberfläche der Fläche 5 erstreckt. Dies insbesondere dann, wenn der rückwärtige Abschnitt 13 einen 180° Halbkreis bildet, dessen gedachte Abschlußlinie parallel zur Öffnung 12 bzw. vorderen Fläche 5 liegt. Der tangentiale Abschnitt 18 ist in seinem vorderen Bereich, der knapp die Hälfte des gesamten Abschnitts 18 ausmacht noch einmal aufgeweitet ausgebildet und mit einem Winkel von etwa 20° geöffnet, so daß die Öffnung 12 insgesamt noch etwas erweitert wird.

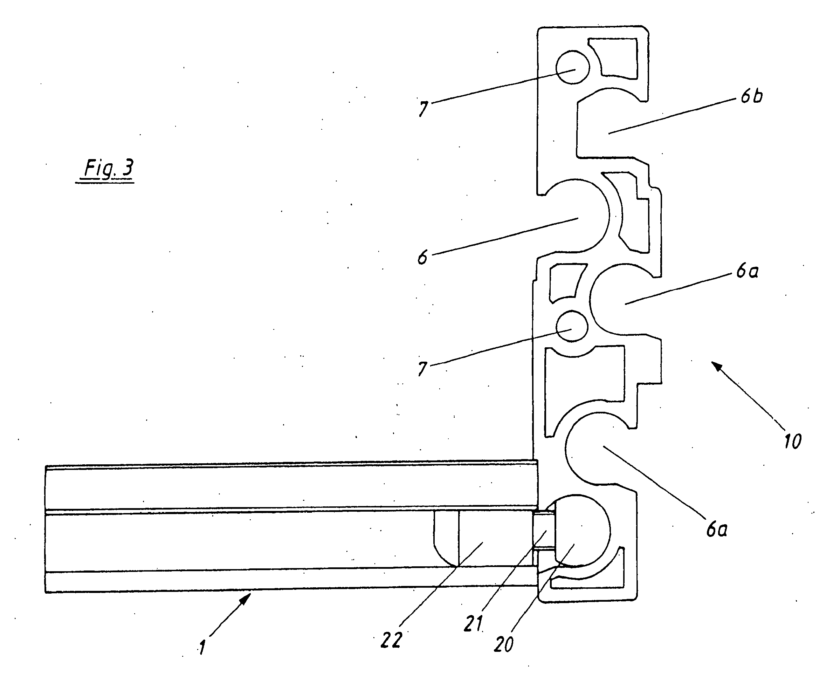

In Fig. 3 ist eine Querschnittsansicht durch eine zweite Ausführungsform eines erfindungsgemäßen Profilelements 10 dargestellt. Hier sind insgesamt fünf Nuten 6 vorgesehen, wobei sich dieses Profilelement insbesondere auch dadurch auszeichnet, daß auf der einen Seite des Profilelements 10 die Nuten 6 in unterschiedlichen Ebenen oder Höhen angeordnet sind. So ist die Nut 6a gegenüber den beiden Nuten 6b, die auf der gleichen Seite angeordnet sind, etwas erhöht ausgebildet. Auf der gegenüberliegenden Seite sind hier zwei zusätzliche Nuten 6 angeordnet. Auch hier ist das Profil durch im Querschnitt kreisförmige Strukturen 7 verstärkt ausgebildet. An eine der Nuten 6 ist mit Hilfe eines Nutensteins 20 ein Profilelement 1 angeschlossen. Der Nutenstein 20 weist hier eine im wesentlichen kreisförmige Gestalt auf, deren Durchmesser dem Durchmesser der kreisförmigen Abschnitte der Nut 6 entspricht. Auf der der Öffnung 12 der Nut zugewandten Seite ist der Nutenstein 20 abgeflacht ausgebildet und mit einer Gewindebohrung versehen, durch die eine Schraube einführbar ist, die durch den Nutenstein 20 hindurch geht und sich im rückwärtigen Teil gegen die Wandung der Nut 6 preßt. Die mit 21 bezeichnete Schraube ist mit einem Gegenstück 22 bzw. Nutenstein verbunden, so daß das Profilelement 1 auf diese Weise an dem Profilelement 10 befestigt ist.

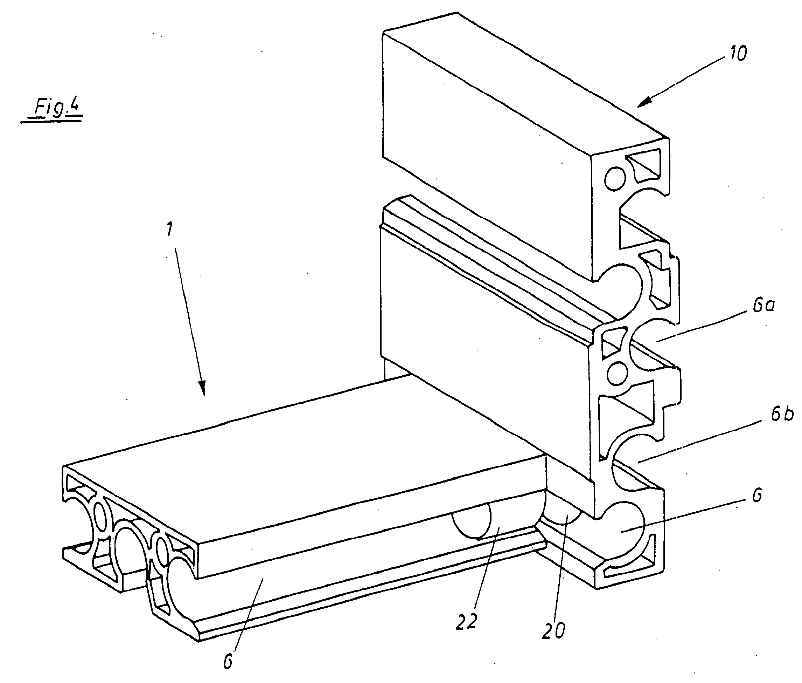

In Fig. 4 sind die in Fig. 3 im Querschnitt dargestellten Profilelemente 1 und 10 in einer perspektivischen Ansicht dargestellt. Hier ist auch noch einmal die Anordnung der Nuten 6a und 6b in unterschiedlichen Ebenen des Profilelements 10 deutlich zu erkennen.

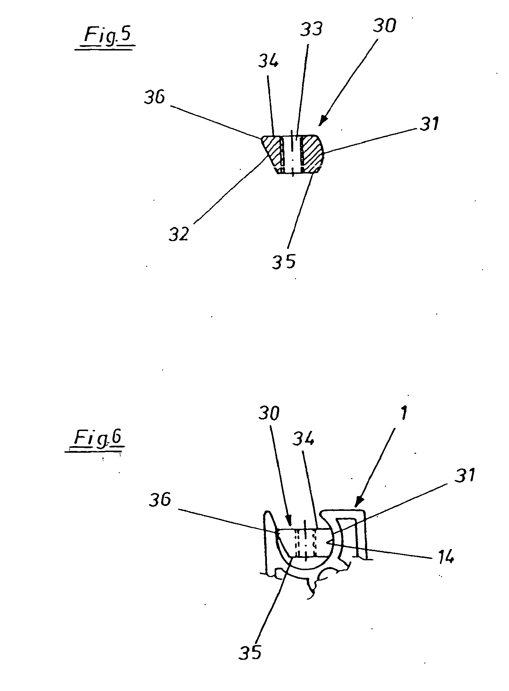

In Fig. 5 ist ein Querschnitt einer zweiten Ausführungsform eines Nutensteins 30 dargestellt. Dieser Nutenstein hat eine gerade Oberfläche 34, durch die eine Gewindebohrung 33 zur ebenfalls geraden Unterseite 35 verläuft, die parallel zu der Oberseite ausgerichtet ist. Die eine Seite ist mit einer kreisförmigen Seitenfläche 31 versehen, deren Radius dem Radius des kreisförmigen Abschnitts der korrespondierenden Nuten entspricht. Auf der gegenüberliegenden Seite ist die Seitenfläche 32 im Querschnitt keilförmig ausgebildet, wobei das spitz zulaufende Ende im unteren Bereich ist. An der oberen Ecke 36 ist der Keil noch einmal abgestumpft, so daß die Breite insgesamt etwas verkleinert ist. Mit diesem Nutenstein ist es möglich, durch ein schräges Einführen des Nutensteins mit der abgerundeten Seite 31 in den kreisförmig fortgesetzten Abschnitt 14 der Nut 6 hinein, den Nutenstein durch die Öffnung 12 in die Nut einzuführen, wobei in der Gewindebohrung 33 des Nutensteins 30 bereits eine Schraube vormontiert ist. Der Nutenstein kann also zusammen mit der vormontierten Schraube in die Nut 6 eingeführt werden. Die Möglichkeit den so vormontierten Nutenstein einzusetzen, stellt eine besondere Arbeitserleichterung da.

In Fig. 6 ist zur Veranschaulichung der Nutenstein in die Nut eingesetzt dargestellt. Gleiche Teile sind mit gleichen Bezugszahlen gekennzeichnet. Durch die Gewindebohrung, die hier gestrichelt eingezeichnet ist, kann eine Schraube eingesetzt sein, die durch den Nutenstein 30 hindurchgeht und im rückwärtigen Abschnitt der Nut festgeschraubt wird und den Nutenstein auf diese Weise zusätzlich fixiert. Die Abmessungen sind gerade so, daß die Schraube im oberen Bereich gerade an dem vorderen Eckpunkt 17 vorbeigeführt wird. Weiterhin ist noch festzuhalten, daß die Länge des tangential fortführenden Abschnitts 18 in dem nicht aufgeweiteten Bereich gerade dem Radius der in dem Nutenstein zu verwendenden Schrauben entspricht.

## Patentansprüche

1. Profilelement, insbesondere für Seitenwangen eines Fördersystems mit mindestens einer sich in Längsrichtung des Profilelements (1, 10) erstreckenden Nut (6) mit einer Öffnung (12) zur Aufnahme von Nutensteinen (20, 30), wobei die Nut (6) im Querschnitt im der Öffnung (12) gegenüberliegenden rückwärtigen Abschnitt (13) im wesentlichen kreisförmig ausgebildet ist und wobei sich der im wesentlichen kreisförmige rückwärtige Abschnitt (13) auf einer Seite (14) im wesentlichen kreisförmig zur Öffnung (12) fortsetzt,
**dadurch gekennzeichnet,**
**daß** sich der im wesentlichen kreisförmige rückwärtige Abschnitt (13) auf einer anderen Seite (18) tangential zur Öffnung fortsetzt

2. Profilelement nach Anspruch 1, **dadurch gekennzeichnet, daß** der rückwärtige Abschnitt (13) der Nut (6) einen Halbkreis bildet.

3. Profilelement nach einem der Ansprüche 1 oder 2, **dadurch gekennzeichnet, daß** sich der tangential zur Öffnung fortsetzende Abschnitt (18) der Nut (6) aufgeweitet ist.

4. Profilelement nach einem der vorhergehenden Ansprüche, **dadurch gekennzeichnet, daß** der sich kreisförmig fortsetzende Abschnitt (14) der Nut ein Kreisbogen von etwa 50 - 60° bildet.

5. Profilelement nach einem der vorhergehenden Ansprüche, **dadurch gekennzeichnet, daß** der sich tangential fortsetzende Abschnitt (14) die untere Seite der Nut (6) bildet.

6. Profilelement nach einem der vorhergehenden Ansprüche, **dadurch gekennzeichnet, daß** das Profilelement (1) drei Nuten (6) aufweist, von den zwei an den Stirnseiten (3, 4) und eine an einer Seitenfläche (4) angeordnet sind.

7. Profilelement nach einem der Ansprüche 1 bis 5, **dadurch gekennzeichnet, daß** das Profilelement (10) auf einer Seite zwei Nuten (6a, 6b) in unterschiedlichen Ebenen des Profilelements (10) aufweist.

8. Profilelement nach einem der vorhergehenden Ansprüche, **dadurch gekennzeichnet, daß** dem Profilelement ein Nutenstein (20, 30) zugeordnet ist.

9. Profilelement Anspruch 8, **dadurch gekennzeichnet, daß** der Nutenstein zumindest in Teilbereichen einen kreisförmigen Querschnitt (31) aufweist.

10. Profilelement nach Anspruch 9, **dadurch gekennzeichnet, daß** der Nutenstein (20, 30) eine Fläche (34) mit einer Gewindebohrung (33) aufweist.

11. Profilelement nach einem der Ansprüche 9 oder 10, **dadurch gekennzeichnet, daß** der Nutenstein (30) asymmetrisch ausgebildet ist.

12. Profilelement nach einem der Ansprüche 9 bis 11, **dadurch gekennzeichnet, daß** der Nutenstein (20, 30) im Querschnitt eine kreisbogenförmige Seitenfläche (31) und eine keilförmige Seitenfläche (32) aufweist.

13. Nutenstein für ein Profilelement nach einem der vorhergehenden Ansprüche 1-7, wobei der Nutenstein zumindest in Teilbereichen einen kreisförmigen Querschnitt aufweist und somit im Querschnitt eine kreisbogenförmige Seitenfläche (31) aufweist,
**dadurch gekennzeichnet, daß** der Nutenstein (30) asymmetrisch ausgebildet ist und im Querschnitt eine keilförmige Seitenfläche (32) aufweist.

## Claims

1. A profile element, particularly for side flanges of a conveyor system with at least one groove (6), which extends in the longitudinal direction of the profile element (1, 10), with an opening (12) for accommodating sliding blocks (20, 30), wherein the groove (6) is essentially configured circularly in cross section in the back section (13) which lies opposite the opening (12) and wherein the essentially circular back section (13) continues essentially circularly on one side (14) to the opening (12),
**characterized**
**in that** the essentially circular back section (13) continues tangentially to the opening on another side (18).

2. The profile element according to Claim 1, **characterized in that** the back section (13) of the groove (6) forms a semicircle.

3. The profile element according to one of Claims 1 or 2, **characterized in that** the section (18) of the groove (6) which continues tangentially to the opening is widened.

4. The profile element according to any one of the preceding claims, **characterized in that** the circularly continuing section (14) of the groove forms a circular arc of approximately 50 - 60°.

5. The profile element according to any one of the preceding claims, **characterized in that** the tangentially continuing section (14) forms the lower side of the groove (6).

6. The profile element according to any one of the preceding claims, **characterized in that** the profile element (1) has three grooves (6) of which two are arranged at the end faces (3, 4) and one is arranged at a side face (4).

7. The profile element according to one of Claims 1 to 5, **characterized in that** the profile element (10) has two grooves (6a, 6b) on one side in different planes of the profile element (10).

8. The profile element according to any one of the preceding claims, **characterized in that** the profile element is assigned a sliding block (20, 30).

9. The profile element according to Claim 8, **characterized in that** the sliding block at least in subregions has a circular cross section (31).

10. The profile element according to Claim 9, **characterized in that** the sliding block (20, 30) has a surface (34) with a threaded hole (33).

11. The profile element according to one of Claims 9 or 10, **characterized in that** the sliding block (30) is configured asymmetrically.

12. The profile element according to one of Claims 9 to 11, **characterized in that** the sliding block (20, 30) has an arc-shaped side face (31) and a wedge-shaped side face (32) in cross section.

13. A sliding block for a profile element according to any one of the preceding Claims 1-7, wherein the sliding block at least in subregions has a circular cross section and thus has an arc-shaped side face (31) in cross section,
**characterized in that** the sliding block (30) is formed asymmetrically and has a wedge-shaped side face (32) in cross section.

## Revendications

1. Elément profilé, notamment pour des joues latérales d'un système de transport avec au moins une rainure (6) s'étendant en direction longitudinale de l'élément profilé (1, 10), avec un orifice (12) pour recevoir des coulisseaux (20, 30), la rainure (6) étant conçue sous forme sensiblement circulaire dans sa section transversale, dans la partie arrière (13) opposée à l'orifice (12) et la partie arrière (13) sensiblement circulaire se prolongeant sur un côté (14) sous forme sensiblement circulaire vers l'orifice (12),
**caractérisé en ce que**, sur un autre côté (18), la partie arrière (13) sensiblement circulaire se prolonge sous forme tangentielle vers l'orifice.

2. Elément profilé selon la revendication 1, **caractérisé en ce que** la partie arrière (13) de la rainure (16) forme un demi-cercle.

3. Elément profilé selon l'une quelconque des revendications 1 ou 2, **caractérisé en ce que** la partie (18) de la rainure (6) se prolongeant sous forme tangentielle vers l'orifice est évasée.

4. Elément profilé selon l'une quelconque des revendications précédentes, **caractérisé en ce que** la partie (14) de la rainure se prolongeant sous forme circulaire forme un arc de cercle d'environ 50 à 60°.

5. Elément profilé selon l'une quelconque des revendications précédentes, **caractérisé en ce que** la partie (14) se prolongeant sous forme tangentielle forme le côté inférieur de la rainure (6).

6. Elément profilé selon l'une quelconque des revendications précédentes, **caractérisé en ce que** l'élément profilé (1) comporte trois rainures (6) dont deux sont disposées sur des faces frontales (3, 4) et une est disposée sur une surface latérale (4).

7. Elément profilé selon l'une quelconque des revendications 1 à 5, **caractérisé en ce que** l'élément profilé (10) comporte sur un côté deux rainures (6a, 6b) dans différents plans de l'élément profilé (10).

8. Elément profilé selon l'une quelconque des revendications précédentes, **caractérisé en ce qu'**un coulisseau (20, 30) est associé à l'élément profilé.

9. Elément profilé selon la revendication 8, **caractérisé en ce que** le coulisseau comporte une section transversale circulaire (31) au moins dans des zones partielles.

10. Elément profilé selon la revendication 9, **caractérisé en ce que** le coulisseau (20, 30) comporte une surface (34) avec un taraudage (33).

11. Elément profilé selon l'une quelconque des revendications 9 ou 10, **caractérisé en ce que** le coulisseau (30) est conçu sous forme asymétrique.

12. Elément profilé selon l'une quelconque des revendications 9 à 11, **caractérisé en ce que** le coulisseau (20, 30) comporte dans sa section transversale une surface latérale (31) en forme d'arc de cercle et une surface latérale (32) cunéiforme.

13. Coulisseau pour un élément profilé selon l'une quelconque des revendications précédentes 1 à 7, le coulisseau comportant au moins dans des zones partielles une section transversale circulaire et comportant de ce fait dans la section transversale une surface latérale (31) en forme d'arc de cercle,
**caractérisé en ce que** le coulisseau (30) est conçu sous forme asymétrique et comporte dans la section transversale une surface latérale (32) cunéiforme.
